# EUROPÄISCHE PATENTANMELDUNG

(11) **EP 4 091 991 A1**
(43) Veröffentlichungstag der Anmeldung: **23.11.2022**
(21) Anmeldenummer: 22172544.3
(22) Anmeldetag: 10.05.2022
(51) Int. Cl.: C02F 1/00, C02F 1/467, E04H 4/12, G05D 21/02, C02F 103/42

(54) **VORRICHTUNG FÜR DIE STEUERUNG DER KOMPONENTEN EINES SCHWIMMBADS**

(30) Priorität: 21.05.2021 DE 202021102618 U
(71) Anmelder: Poolomio GmbH & Co. KG, 66386 St. Ingbert Saarland (DE)
(72) Erfinder: Vogelgesang, Rainer, 66386 St. Ingbert (DE)
(74) Vertreter: Patentanwaltskanzlei Vièl & Wieske PartGmbB

(57) **Zusammenfassung**

Die Erfindung betrifft eine Vorrichtung für die Steuerung der Komponenten eines Schwimmbads.

Um eine modular aufgebaute Vorrichtung zur Steuerung der Komponenten eines Schwimmbads zu schaffen, die als "Kopfsteuerung" mit allen externen Technikkomponenten des Schwimmbads korrespondieren kann und zwar völlig unabhängig von Bauart, Größe, Leistungsaufnahme und Aufstellort, wird im Rahmen der Erfindung vorgeschlagen, daß die Vorrichtung
• einen Zulauf von einem Skimmer aufweist, der über eine Verrohrung mit einem Sperrorgan mit dem Eingang einer Umwälzpumpe verbindbar ist,
• einen Zulauf vom Ausgang eines Filterkessels aufweist, der durch eine Verrohrung mit einem Sperrorgan mit einem Kaltwassereingang einer Wärmepumpe oder einer Kaltwassereinlaufdüse des Schwimmbads verbindbar ist,
• einen Zulauf von einer Wärmepumpe, der durch eine Verrohrung mit einem Sperrorgan mit einer Warmwassereinlaufdüse des Schwimmbads verbindbar ist,
• wobei die Vorrichtung die Steuerungsmittel für eine Umwälzpumpe umfaßt.

Diese Vorrichtung ermöglicht es, bis zu zwei Einlaufdüsen zu bedienen, wobei einerseits die Warmwasserversorgung des Schwimmbads von der Chemieversorgung außerhalb des Schwimmbads trennbar ist und andererseits im Schwimmbad selbst durch die erhöhte Zirkulation bei zwei Einlaufdüsen eine optimale Vermischung beider erzielt wird.

## Beschreibung

Die Erfindung betrifft eine Vorrichtung für die Steuerung der Komponenten eines Schwimmbads.

Moderne Schwimmbäder bzw. Pools weisen eine Vielzahl von Komponenten zur Zirkulation und Reinigung, zur chemischen Aufbereitung sowie zur Temperierung des Wassers auf, die einer Steuerung bedürfen. Weiterhin verfügen moderne Schwimmbäder über eine Vielzahl weiterer Komponenten auf, beispielsweise Beleuchtungsmittel, Wasserfälle etc., die ebenfalls gesteuert werden müssen.

Die DE 10 2007 052 520 B4 betrifft ein Messsystem zur Kontrolle und/oder Steuerung einer Wasseraufbereitung, insbesondere in einem Schwimmbad. Das Messsystem umfasst ein Partikelzählgerät, das als Laserpartikelzählgerät ausgebildet und an einen Wasseraufbereitungskreislauf angeschlossen ist, wobei das Partikelzählgerät mit einem Vorlaufkreislauf und/oder Rücklaufleitung einer im Wasseraufbereitungskreislauf vorhandenen Filtereinheit verbunden ist. Das Messsystem weist weiterhin ein Personenzählgerät zur Erfassung der personenbedingten Belastung des aufzubereitenden Wassers und ein Datenerfassungsgerät, das mit dem Partikelzählgerät und dem Personenzählgerät gekoppelt und mit wenigstens einem Flockungsmittelgerät verbunden ist, das mit der Vorlaufleitung der Filtereinheit verbunden ist, auf. Dabei werden weitere Parameter des Aufbereitungsprozesses durch ein Messgerät zur Erfassung von Prozessparametern zusätzlich erfasst. Hierzu zählen die Messung von Chlor, Aluminium, Ammonium, Nitrat, Eisen usw. mittels eines Photometers. Weiterhin werden Volumenstrom, Frischwasserzufuhr, und Spülwasserverbrauch sowie Filterlaufzeiten, Spülintervalle, Ablauf des Spülprogramms erfasst bzw. ausgelesen. Es wird eine weitere zusätzliche Messeinheit zur Ermittlung von Hygieneparametern, insbesondere Chlor, pH-Wert und Redoxpotential, offenbart. Diese Parameter können durch eine Vorrichtung korrigiert werden. Zur Steuerung und Kontrolle der Messanlage aus der Ferne ist das Datenerfassungsgerät über ein Datenfernübertragungsgerät, beispielsweise ein UMTS- Modemrouter, auf ein Firmennetzwerk aufgeschaltet.

Die DE 100 29 568 A1 offenbart eine Wasserbeckenanlage für Schwimm- und/oder Badezwecke mit einer Mess- und Regeleinrichtung zur Sicherstellung der Wasserqualität und ein Mess- und Regelgerät für solche Wasserbeckenanlagen. Die Mess- und Regeleinrichtung dient zur kontinuierlichen Messung und Auswertung von Kenngrößen des Messwassers wie insbesondere Gesamtchlor, freiem und gebundenen Chlor, pH-Wert, Redox, Ozon und Temperatur. Eine Umwälzpumpe und eine Wasseraufbereitungseinrichtung werden entsprechend der Kenngrößen mittels eines Prozessors geregelt. Die Leistung der Umwälzpumpe kann dabei anhand der Wasserqualität und der Ruhezeiten herabgesetzt werden. Die Steuerung der Wasseraufbereitung kann dabei insbesondere Zeitgesteuert erfolgen. Die Daten können über einen Berührungsbildschirm dargestellt werden. Das Mess- und Regelgerät besitzt ein oder mehrere Ausgänge für die drahtlose oder drahtgebundene Übertragung der Daten zu ein oder mehreren an anderen Beobachtungsstellen angeordneten Bildschirmgeräten. Die drahtgebundene oder drahtlose Übertragung kann dabei über eine Telefonverbindung und/oder ein Modem für den Zugang zu einer Telefonverbindung sein. Die Übertragung kann auch Teil einer Fernüberwachungsanlage sein.

Die DE 11 2018 004 014 T5 betrifft ein System zum Steuern der Desinfektion in einem rezirkulierenden Wassersystem. Das System ist dabei zur Nachrüstung in ein existierendes Rezirkulationssystem geeignet. Das System beinhaltet mindestens zwei Wassereigenschaftssensoren, die einen Oxidationsreduktionspotenzialsensor und einen Sensor für freies Chlor beinhalten; einen Prozessor, der konfiguriert ist, um basierend auf den Messungen der Eigenschaftssensoren mindestens einen Kennwert zu bestimmen und den mindestens einen Kennwert mit mindestens einem oder mehreren vorher festgelegten Schwellenwerten zu vergleichen; und ein Steuergerät, das konfiguriert ist, um basierend auf dem Vergleichswert eine Rezirkulationsrate mittels einer Flusssteuerungsvorrichtung und/oder ein Desinfektionsmittelniveau mittels eines Desinfektionssystems zu regulieren. Das System beinhaltet ferner mindestens einen Wassereigenschaftssensor, der aus der Gruppe ausgewählt ist, die aus einem Sensor für Gesamtchlor oder gebundenes Chlor, Leitfähigkeitssensor, einem Sensor für gelöste Gesamtfeststoffe, einem Trübungssensor, einem Temperatursensor, einem Drucksensor und einem Sättigungsindexsensor besteht. Zur Regulation kann das Steuergerät mindestens ein Behandlungsmodul, das ein Flockungsmitteldosierungssystem und stromabwärts davon eine Filtrationseinheit beinhaltet, ein Heizungssystem; ein Modul zur Reduktion des gebundenen Chlors; und ein Modul zur pH-Korrektur ansteuern.

In der WO 2018 122858 A9 wird ein System zur umfassenden Überwachung, Analyse und Wartung von Wasser und Ausrüstung in Schwimmbädern beschrieben. Das System besteht aus akustischen Sensoren; einer lokalen Verarbeitungseinheit, die Daten von den genannten akustischen Sensoren sammelt und verarbeitet, und einem Online-Server, wobei der Online-Server Daten von der lokalen Verarbeitungseinheit empfängt, maschinelle Lernalgorithmen anwendet, um die erfassten Daten zu integrieren und eine optimale Richtlinie für die Poolwartung zu erhalten, und dem Bereitstellen einer Online-Schnittstelle für mindestens einen von Poolbesitzern, Poolservicetechniker, Poolwartungsunternehmen, Poolverkäufer und Poolhändler, wobei die maschinellen Lernalgorithmen ein akustisches Modell umfassen, das trainiert ist, um das Verhalten der von den Sensoren gewonnenen Daten zu lernen und mindestens einen Gerätefehler, den Ort des Fehlers und die Art des Fehlers zu identifizieren und die gegenseitige Beeinflussung zwischen/unter Geräten/Instrumenten in dem Poolsystem zu identifizieren. Die lokale Verarbeitungseinheit kann zusätzlich den Wochentag und Monat des Jahres; die Anzahl der Benutzer an diesem Tag; Daten des Wasserstandes; den Druck; den Wasserdurchfluss; die Temperatur; die Wassertrübung; Aspekte der Beckengestaltung; und Umgebungsdaten erfassen und verarbeiten. Die Onlineschnittstelle kann dabei Benachrichtigungen über den Poolstatus bereitstellen.

In der DE 603 14 799 T2 wird eine Schwimmbeckenwasseraufbereitungsanlage beschrieben. Die Anlage umfasst eine Wasserfiltrierungsvorrichtung mit einer Motorpumpe, eine Vorrichtung zur chemischen Behandlung von Wasser, Leitungen mit entsprechenden Ventilen sowie Anschlussöffnungen zum Einlass des aus dem Schwimmbecken einströmenden Wassers und zur Rückführung des behandelten Wassers und die entsprechenden Armaturen. Die Bestandteile sind auf einem Grundgestell angeschlossen und installiert, das es erlaubt, die betriebsbereite Anlage bis zum für sie ausgewählten Aufstellungsort zu transportieren. Alle Anlagen haben einen Ablaufausgang und können mit einem Computer verbunden werden. Die Armaturen und Bestandteile haben in ihrer Gesamtanordnung solche Abmessungen, dass sie in einem herkömmlichen Container unterbringbar sind.

Die DE 10 2007 029 702 A1 betrifft ein System zur automatisierten Wasseraufbereitung, bei welchem eine Anreicherung von Wasser mit Ionen verwendet wird. Das System weist einen Sensor zur Erfassung von Cu- und Ag-Ionen im Wasser als Eingangsdaten für eine zentrale Steuereinheit auf. Basierend auf den Eingangsdaten erzeugt die Steuereinheit Ausgangsdaten, die die Erzeugung von Cu- und Ag-Ionen in einem lonisierungs-Untersystem reguliert. Das System umfasst Sensoren und Regler zum Messen und Regeln des pH-Wertes, der Temperatur, der Füllmenge, der Ventilsteuerung und des Drucks/Durchflusses. Die Steuereinheit steht mit einer lokalen Anwenderschnittstelle und/oder einer Fernbedienungsschnittstelle in Verbindung, die zum Anzeigen von Sensorwerten und Betriebszuständen mittels einer Anzeigeeinheit und zum manuellen Programmieren des Systems mittels eines Tastenfelds geeignet sind/ist. Die voreingestellten Werte und durch die Sensoren gemessenen Werte zur Steuerung und/oder Regelung des Systems werden in einer zentralen Steuereinheit verarbeitet.

Die DE 10 2020 106 080 A1 beschreibt eine transportable bzw. transportfähige oder mobile Baueinheit zum vorzugsweisen autarken Betrieb eines Schwimmbeckenwassers.

Die EP 3 632 852 A1 offenbart eine Schwimmbadanlage mit einem Wasserversorgungssystem für salzhaltiges Wasser. Es umfasst Mittel zu Erfassung der chemischen Zusammensetzung für die Messung der tatsächlichen Parameter der Zusammensetzung des salzhaltigen Wassers, einen Reaktionsfilter, hydraulisch mit dem Wasserversorgungssystem und dem Ausgleichsbehälter verbunden, geeignet für die Erzeugung und Umfassung des Korrekturwassers, Elektronischer Regler, elektrisch verbunden mit den Mitteln für die Erfassung der Zusammensetzung, wobei dieser auf der Grundlage der tatsächlichen Werte der Parameter, die von den Mittleln für die chemische Zusammensetzung ermittelt werden, die hydraulische Verbindung zwischen dem Wasserversorgungssystem und dem Reaktionsfilter öffnet und schließt.

Aufgabe der Erfindung ist es, eine modular aufgebaute Vorrichtung zur Steuerung der Komponenten eines Schwimmbads zu schaffen, die als "Kopfsteuerung" mit allen externen Technikkomponenten des Schwimmbads korrespondieren kann und zwar völlig unabhängig von Bauart, Größe, Leistungsaufnahme und Aufstellort. Diese Vorrichtung soll sowohl für Süßwasserschwimmbäder als auch für Salzwasserschwimmbäder geeignet sein.

Diese Aufgabe wird erfindungsgemäß dadurch gelöst, daß die Vorrichtung
- einen Zulauf von einem Skimmer aufweist, der über eine Verrohrung mit einem Sperrorgan mit dem Eingang einer Umwälzpumpe verbindbar ist,
- einen Zulauf vom Ausgang eines Filterkessels aufweist, der durch eine Verrohrung mit einem Sperrorgan mit einem Kaltwassereingang einer Wärmepumpe oder einer Kaltwassereinlaufdüse des Schwimmbads verbindbar ist,
- einen Zulauf von einer Wärmepumpe, der durch eine Verrohrung mit einem Sperrorgan mit einer Warmwassereinlaufdüse des Schwimmbads verbindbar ist,
- wobei die Vorrichtung die Steuerungsmittel für eine Umwälzpumpe umfaßt.

Diese Vorrichtung ermöglicht es, bis zu zwei Einlaufdüsen zu bedienen, wobei einerseits die Warmwasserversorgung des Schwimmbads von der Chemieversorgung außerhalb des Schwimmbads trennbar ist und andererseits im Schwimmbad selbst durch die erhöhte Zirkulation bei zwei Einlaufdüsen eine optimale Vermischung beider erzielt wird.

Eine bevorzugte Ausgestaltung der Erfindung besteht darin, daß die Vorrichtung die Steuerungsmittel für eine Wärmepumpe und/oder die Steuerungsmittel für eine Beleuchtung des Schwimmbads umfaßt.

Die Vorrichtung kann ohne oder mit einer Wärmepumpe betrieben werden.

Die erfindungsgemäße Vorrichtung kann jede Art von Umwälzpumpen und Wärmepumpen steuern und zwar völlig unabhängig von Bauart, Größe, Leistungsaufnahme und Aufstellort.

Eine Weiterbildung der Erfindung besteht darin, daß eine elektronische Steuerung für die Salzwasser- bzw. Süßwasseraufbereitung vorgesehen ist.

Eine vorteilhafte Ausgestaltung der Erfindung besteht darin, daß eine Meßvorrichtung für den pH-Wert des Wassers vorgesehen ist.

Eine Ausgestaltung der Erfindung besteht darin, daß eine Dosierpumpe für die pH-Regulierung des Wassers vorgesehen ist.

Über diese Dosierpumpe werden Chemikalien zu dem Wasser zugegeben, die den pH-Wert erhöhen oder senken.

Eine andere vorteilhafte Ausgestaltung der Erfindung besteht darin, daß eine Meßvorrichtung für die Konduktivität des Wassers vorgesehen ist.

Eine Weiterentwicklung der Erfindung besteht darin, daß in einer Verrohrung mit einem Sperrorgan zwischen dem Zulauf von der Wärmepumpe und der Kaltwassereinlaufdüse ein Chlorinator zur elektrochemischen Chlorerzeugung angeordnet ist.

Eine andere Weiterbildung der Erfindung besteht darin, daß eine Dosierpumpe für die Chlorzugabe vorgesehen ist.

Diese Dosierpumpe kann alleine (bei Süßwasserschwimmbädern) oder (bei Salzwasserschwimmbädern) in Kombination mit einem Chlorinator die Chlorversorgung des Schwimmbadwassers sicherstellen. Dies ermöglicht auch die Steuerung großer Schwimmbäder mit der erfindungsgemäßen Vorrichtung.

Eine andere Weiterbildung der Erfindung besteht darin, daß eine automatische Meßvorrichtung für das Redoxpotential vorgesehen ist.

Entsprechend der Meßwerte dieser Meßvorrichtung wird der Chlorinator über dessen Steuerung ein- oder ausgeschaltet.

Eine bevorzugte Ausgestaltung der Erfindung besteht darin, daß in der Verrohrung zwischen dem Zulauf vom Ausgang des Filterkessels und der Kaltwassereinlaufdüse ein Solar-Wegeventil vorgesehen ist.

In diesem Zusammenhang kann das Solarwegeventil manuell verstellbar sein.

Alternativ kann das Solarwegeventil auch über einen Stellmotor verstellbar sein.

Eine vorteilhafte Weiterbildung besteht darin, daß das Solarwegeventil eine Differenztemperatur-Regelung aufweist.

Eine Weiterbildung der Erfindung besteht darin, daß das Solarwegeventil mit einem Solarabsorberkreislauf verbunden ist.

Dies ermöglicht das Beheizen des Schwimmbades mit einem Solarabsorber. Die Vorrichtung kann dann mit einer Wärmepumpe oder einer Solaranlage und auch in Kombination mit einer Wärmepumpe und einer Solaranlage betrieben werden. Bei letzterer ist von Bedeutung, daß die Solaranlage vor der Wärmepumpe angeordnet ist. Liegt die Temperatur der Solaranlage über derjenigen der Wärmepumpe, wird die Wärmepumpe über ein Thermostat abgeschaltet, so daß eine CO₂-neutrale Wassererwärmung erfolgt.

Weiterhin ist im Rahmen der Erfindung vorgesehen, daß eine Vorrichtung zur Ansteuerung eines Stangenventils vorgesehen ist.

Das Stangenventil ersetzt den Wegeschalter der Filteranlage und ermöglicht ein automatisches Ansteuern der Filteranlage, beispielsweise zum zyklischen Rückspülen des Filters. Darüber hinaus wird durch die Bauform und die konstruktive Ausführung die Wasserperformance deutlich verbessert.

Eine bevorzugte Ausgestaltung der Erfindung besteht darin, daß die Sperrorgane als Schieber ausgebildet sind.

Schließlich ist es im Rahmen der Erfindung vorgesehen, daß die Vorrichtung auf einem Flächenelement angeordnet ist.

Die Vorteile der erfindungsgemäßen Vorrichtung bestehen im Wesentlichen darin, daß bereits vorhandene Technikkomponenten in die Vorrichtung integriert und mit neuen Technikkomponenten kombiniert werden können. Es ist somit möglich, über eine gewisse Zeitdauer die Anlage durch Ersetzen alter Technikkomponenten durch neue Technikkomponenten zu verbessern.

Zudem ermöglicht die Vorrichtung eine flexible Anpassung an jegliche vorhandene Verrohrungsgegebenheiten.

Weiterhin kann die Vorrichtung praktisch unabhängig von der jeweils zu behandelnden Wassermenge verwendet werden.

Die Steuerung der Vorrichtung kann eine WLAN-Anbindung aufweisen und die Steuerung kann über eine App mittels eines Mobiltelefons erfolgen. Ebenso kann eine Kundenschnittstelle vorgesehen sein.

Es können weitere Sonderfunktionen integriert werden, wie beispielsweise ein Wasserfall oder ein Springbrunnen.

Nachfolgend werden Ausführungsbeispiele der Erfindung anhand von Zeichnungen erläutert.

Es zeigen
- Fig. 1: eine erste Ausgestaltung der Erfindung ohne Wärmepumpe, bei der die Wasserversorgung über die Einlaufdüse 1 erfolgt,
- Fig. 2: die erste Ausgestaltung ohne Wärmepumpe, bei der die Wasserversorgung über die Einlaufdüsen 1 und 2 erfolgt,
- Fig. 3: die erste Ausgestaltung der Erfindung, bei der eine Wärmepumpe in räumlicher Nähe zur Vorrichtung angeordnet ist, bei der die Wasserversorgung über die Einlaufdüse 1 erfolgt,
- Fig. 4: die erste Ausgestaltung der Erfindung, bei der eine Wärmepumpe in räumlicher Nähe zur Vorrichtung angeordnet ist, bei der die Wasserversorgung über die Einlaufdüse 1 und die Warmwasserversorgung über die Einlaufdüse 2 erfolgen,
- Fig. 5: die erste Ausgestaltung der Erfindung, bei der eine Wärmepumpe nicht in räumlicher Nähe zur Vorrichtung angeordnet ist, bei der die Wasserversorgung über die Einlaufdüse 1 erfolgt,
- Fig. 6: die erste Ausgestaltung der Erfindung, bei der eine Wärmepumpe nicht in räumlicher Nähe zur Vorrichtung angeordnet ist, bei der die Wasserversorgung über die Einlaufdüse 1 und die Wasserversorgung für die Wassererwärmung mittels der Wärmepumpe über die Einlaufdüse 2 erfolgt, wobei der Warmwasserauslauf der Wärmepumpe dann separat an das Schwimmbad herangeführt wird,
- Fig. 7: die erste Ausgestaltung der Erfindung mit einer Solaranlagensteuerung und einem Solarabsorberkreislauf bei aktiver Solaranlage, zusammen mit einer Wärmepumpe in räumlicher Nähe zur Vorrichtung,
- Fig. 8: die erste Ausgestaltung der Erfindung mit einer Solaranlagensteuerung und einem Solarabsorberkreislauf bei inaktiver Solaranlage,
- Fig. 9: eine zweite Ausgestaltung der Erfindung, bei der die Wasserversorgung über die Einlaufdüse 1 erfolgt,
- Fig. 10: die zweite Ausgestaltung ohne Wärmepumpe, bei der die Wasserversorgung über die Einlaufdüsen 1 und 2 erfolgt,
- Fig. 11: die zweite Ausgestaltung der Erfindung mit einer Solaranlagensteuerung und einem Solarabsorberkreislauf bei aktiver Solaranlage,
- Fig. 12: die zweite Ausgestaltung der Erfindung mit einer Solaranlagensteuerung und einem Solarabsorberkreislauf bei inaktiver Solaranlage.

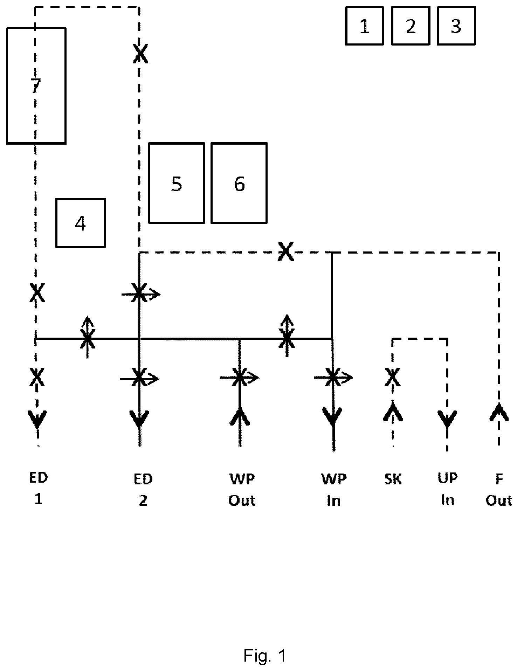

Bei der Ausgestaltung gemäß Fig. 1 weist die Vorrichtung einen Zulauf von einem Skimmer (SK) auf, der über eine Verrohrung mit dem Eingang einer Umwälzpumpe (UP In) verbindbar ist. Von der Umwälzpumpe, die nicht Teil der Vorrichtung ist, gelangt das Wasser über einen Filterkessel, der auch nicht Teil der Vorrichtung ist, zu dem Zulauf vom Ausgang des Filterkessels (F Out) der Vorrichtung, der durch eine Verrohrung mit einer Wassereinlaufdüse (ED 1) des Schwimmbads verbindbar ist. Es wäre auch möglich, das Wasser über die andere Wassereinlaufdüse des Schwimmbades (ED 2) einzuleiten.

Das Wasser durchläuft die Vorrichtung auf den gestrichelten Wegen.

Weiterhin verfügt die Vorrichtung über Steuerungsmittel (1) für eine Umwälzpumpe, Steuerungsmittel (2) für eine Wärmepumpe und Steuerungsmittel (3) für eine Beleuchtung des Schwimmbads, die im einfachsten Fall als Ein/Aus-Schalter ausgebildet sind.

Die pH-Wert-Einstellung erfolgt bei dieser Variante ebenso wie die Chlor-Messung und die Chlor-Dosierung von Hand am Schwimmbad.

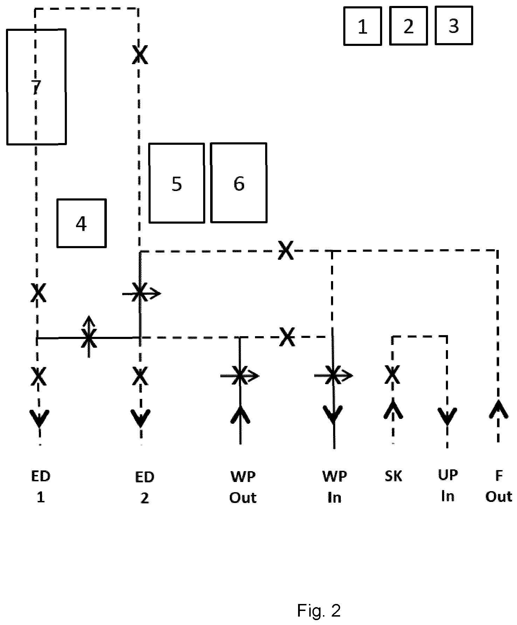

Der Aufbau und die Funktionsweise der Vorrichtung gemäß Fig. 2 entspricht im Wesentlichen denjenigen der Fig. 1, wobei hier jedoch die Stellorgane im Auslaufbereich anders gestellt sind, so daß die (Kalt-)wasserversorgung über die Einlaufdüse 1 (ED 1) erfolgt, während die Warmwasserversorgung des Schwimmbads über die Einlaufdüse 2 (ED 2) erfolgt.

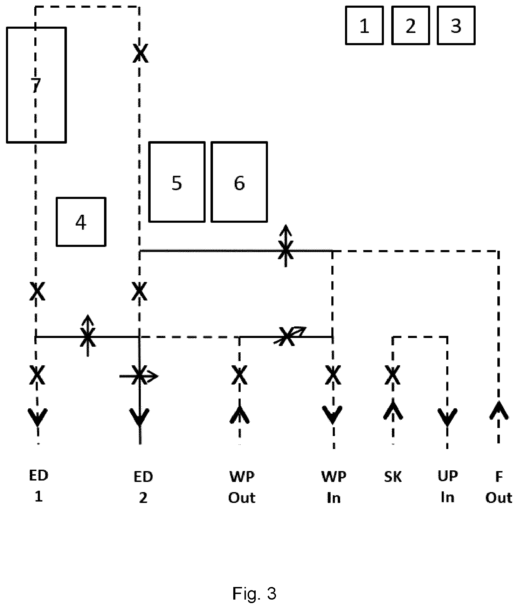

Der Aufbau und die Funktionsweise der Vorrichtung gemäß Fig. 3 entsprechen denjenigen der Fig. 1, wobei jedoch hier eine Wärmepumpe in räumlicher Nähe der Vorrichtung vorgesehen ist.

In diesem Fall wird das Wasser über den Kaltwassereingang der Wärmepumpe (WP In) zur Wärmepumpe geführt, die nicht Teil der Vorrichtung ist, und von dort über einen Zulauf von einer Wärmepumpe (WP Out), der mit einer Warmwassereinlaufdüse (ED2) des Schwimmbads verbindbar ist.

Durch das vollumfängliche Bypassventil zwischen dem Kaltwassereingang (WP In) der Wärmepumpe und dem Warmwasserausgang (WP Out) der Wärmepumpe kann die Wassermenge, die durch die Wärmepumpe geht, reduziert werden, indem ein Teil der Wassermenge an der Wärmepumpe vorbeigeführt wird, ohne jedoch die Gesamtdurchflußmenge zu reduzieren. Dies ermöglicht eine optimale Nutzung der Wärmepumpe.

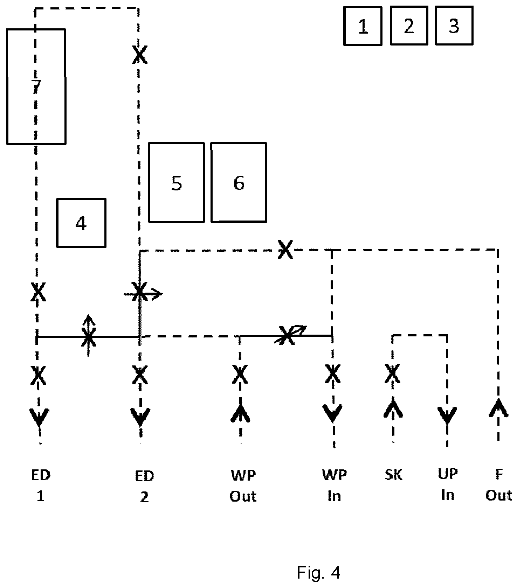

Der Aufbau und die Funktionsweise der Vorrichtung gemäß Fig. 4 entsprechen im Wesentlichen denjenigen der Fig. 2, wobei jedoch hier eine Wärmepumpe in räumlicher Nähe der Vorrichtung vorgesehen ist.

Somit erfolgt hier die (Kalt-)wasserversorgung über die Einlaufdüse 1 (ED 1), während die Warmwasserversorgung des Schwimmbads über die Einlaufdüse 2 (ED 2) erfolgt.

Auch hier kann durch das vollumfängliche Bypassventil zwischen dem Kaltwassereingang (WP In) der Wärmepumpe und dem Warmwasserausgang (WP Out) der Wärmepumpe die Wassermenge, die durch die Wärmepumpe geht, reduziert werden, indem ein Teil der Wassermenge an der Wärmepumpe vorbeigeführt wird, ohne jedoch die Gesamtdurchflußmenge zu reduzieren. Dies ermöglicht eine optimale Nutzung der Wärmepumpe.

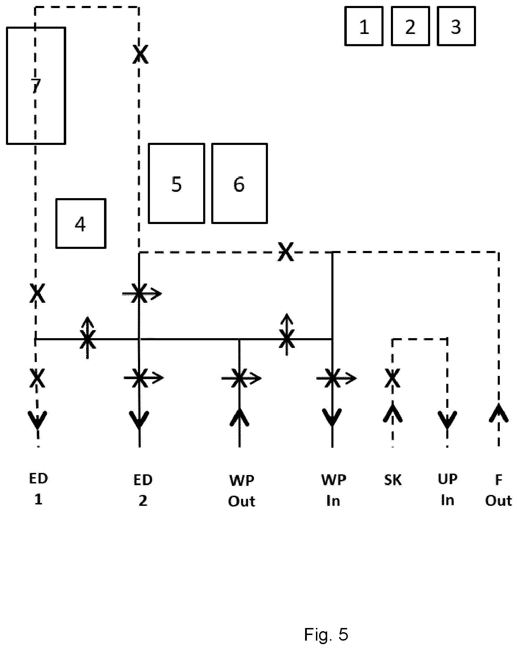

Der Aufbau und die Funktionsweise der Vorrichtung gemäß Fig. 5 entsprechen im Wesentlichen denjenigen der Fig. 3, wobei jedoch hier eine Wärmepumpe nicht in räumlicher Nähe der Vorrichtung angeordnet ist. Die Wasserversorgung und die Wasserversorgung für die Wärmepumpe erfolgen über die Einlaufdüse 1 (ED1).

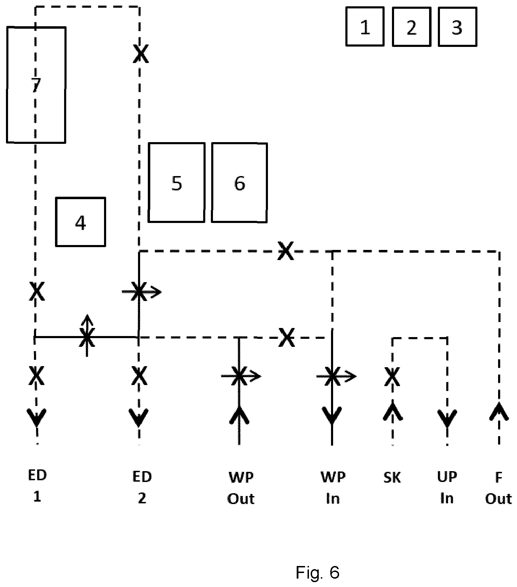

Der Aufbau und die Funktionsweise der Vorrichtung gemäß Fig. 6 entsprechen im Wesentlichen denjenigen der Fig. 4, wobei jedoch hier eine Wärmepumpe nicht in räumlicher Nähe der Vorrichtung vorgesehen ist, nämlich zwischen der Einlaufdüse 2 (ED2) und dem Schwimmbad vorgesehen ist. Hierdurch kann der Weg des Warmwassers zum Schwimmbad und die damit verbundenen Wärmeverluste reduziert werden. Die Wasserversorgung erfolgt über die Einlaufdüse 1 (ED1).

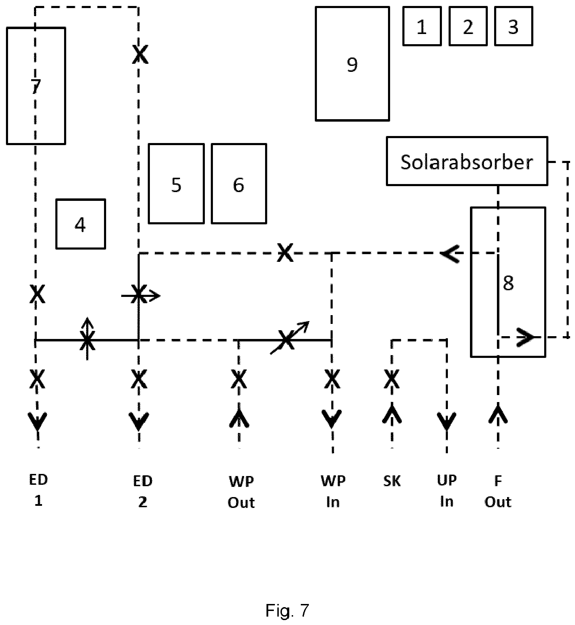

Der Aufbau und die Funktionsweise der Vorrichtung gemäß Fig. 7 entsprechen im Wesentlichen denjenigen der Fig. 4, wobei jedoch zusätzlich ein Solar-Wegeventil (8) und eine manuelle oder elektronische Solaranlagen-Steuerung (9) mit Differenztemperatur-Regelung vorgesehen sind. Die Wärmepumpe befindet sich in räumlicher Nähe zur Vorrichtung. Bei der Vorrichtung gemäß Fig. 7 ist die Solaranlage aktiv, d.h. die Temperatur des Solarabsorbers liegt über derjenigen des Schwimmbades.

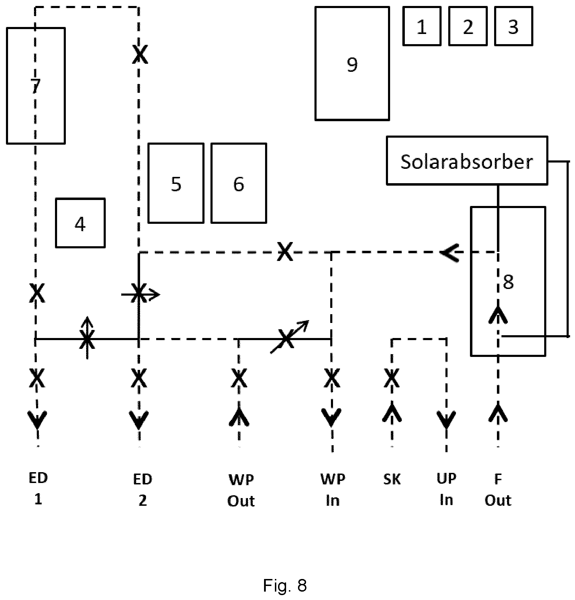

Fig. 8 zeigt die gleiche Vorrichtung wie Fig. 7 bei inaktiver Solaranlage.

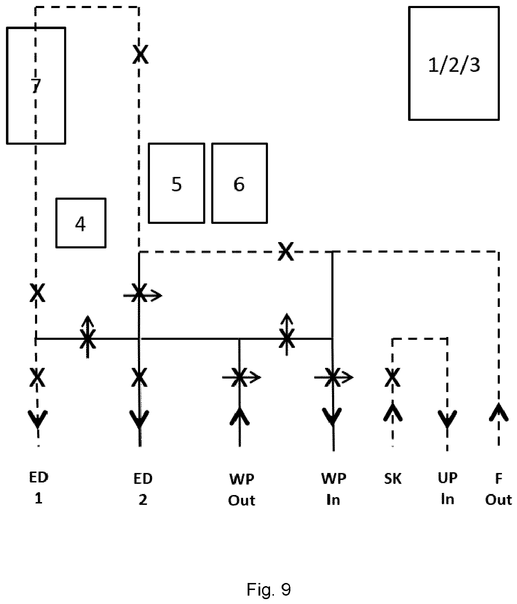

Der Aufbau und die Funktionsweise der Vorrichtung gemäß Fig. 9 entsprechen im Wesentlichen denjenigen der Fig. 1, wobei jedoch hier eine elektronische Steuerung (1, 2, 3) für die Salzwasser- bzw. Süßwasseraufbereitung, eine oder mehrere Dosierpumpe(n) (4) für die pH-Wert-Regulierung sowie für die Chlorzugabe, eine automatische pH-Wert-Meßvorrichtung (5) und eine automatische Meßvorrichtung für das Redoxpotential (6) vorgesehen sind.

Die Ansteuerung der Schwimmbadbeleuchtung erfolgt ebenfalls über eine Steuerung.

Zusätzlich kann auch eine Vorrichtung zur Konduktivitätsmessung in die Vorrichtung integriert sein, um den Salzgehalt des Wassers zu ermitteln und gegebenenfalls an einen Sollwert anzupassen.

Diese Anlage kann selbstverständlich durch eine Wärmepumpe in räumlicher Nähe oder nicht in räumlicher Nähe zur Vorrichtung ergänzt werden, wie in den Fig. 3 bzw. 5 dargestellt.

Bei Salzwasseranlagen ist zudem in einer Verrohrung mit einem Sperrorgan zwischen dem Zulauf von der Wärmepumpe (F Out) und der Kaltwassereinlaufdüse (ED1) ein Chlorinator (7) zur elektrochemischen Chlorerzeugung angeordnet.

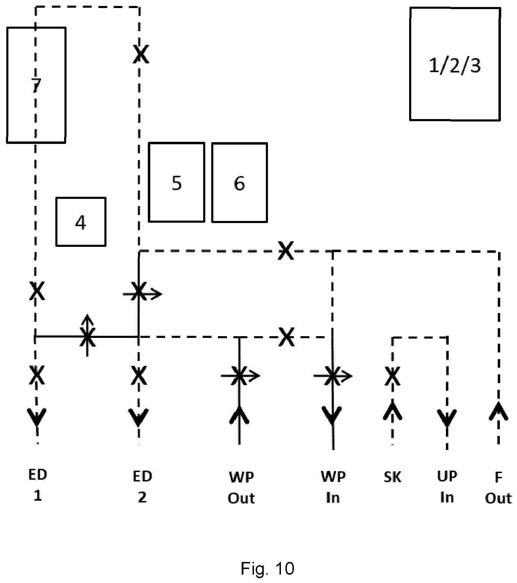

Der Aufbau und die Funktionsweise der Vorrichtung gemäß Fig. 10 entsprechen im Wesentlichen denjenigen der Fig. 2, wobei jedoch hier eine elektronische Steuerung (1, 2, 3) für die Salzwasser- bzw. Süßwasseraufbereitung, eine oder mehrere Dosierpumpe(n) (4) für die pH-Wert-Regulierung sowie für die Chlorzugabe, eine automatische pH-Wert-Meßvorrichtung (5) und eine automatische Meßvorrichtung für das Redoxpotential (6) vorgesehen sind.

Die Ansteuerung der Schwimmbadbeleuchtung erfolgt ebenfalls über eine Steuerung.

Zusätzlich kann auch eine Vorrichtung zur Konduktivitätsmessung in die Vorrichtung integriert sein, um den Salzgehalt des Wassers zu ermitteln und gegebenenfalls an einen Sollwert anzupassen.

Diese Anlage kann selbstverständlich durch eine Wärmepumpe in räumlicher Nähe oder nicht in räumlicher Nähe zur Vorrichtung ergänzt werden, wie in den Fig. 4 bzw. 6 dargestellt.

Bei Salzwasseranlagen ist zudem in einer Verrohrung mit einem Sperrorgan zwischen dem Zulauf von der Wärmepumpe (F Out) und der Kaltwassereinlaufdüse (ED1) ein Chlorinator (7) zur elektrochemischen Chlorerzeugung angeordnet.

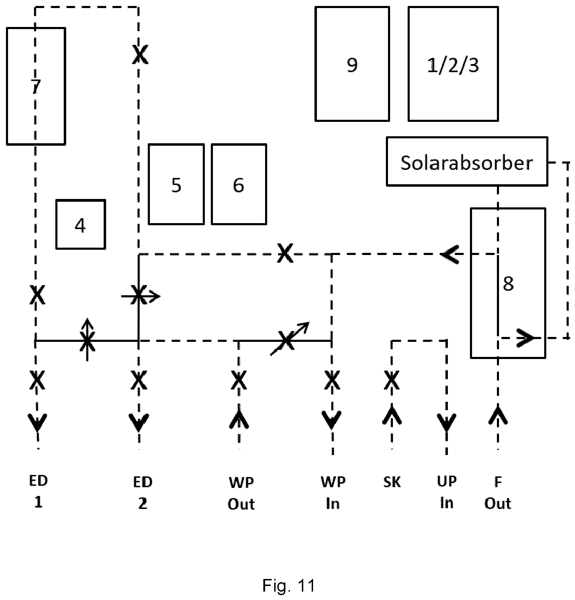

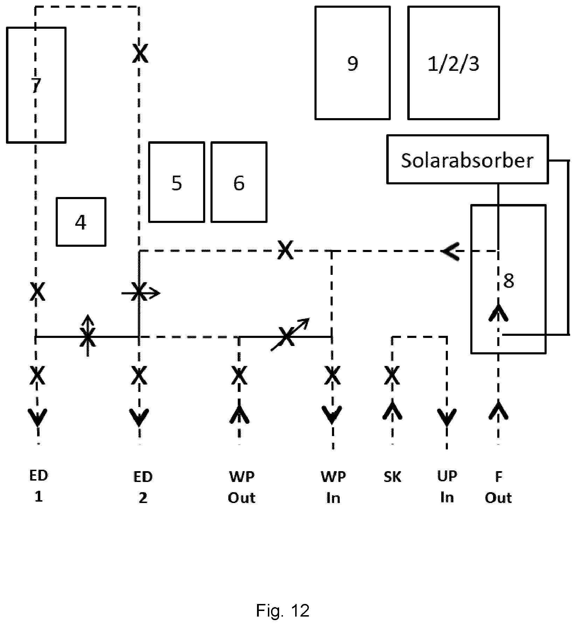

Der Aufbau und die Funktionsweise der Vorrichtung gemäß Fig. 11 entsprechen im Wesentlichen denjenigen der Fig. 9, wobei jedoch zusätzlich ein Solar-Wegeventil (8) und eine manuelle oder elektronische Solaranlagen-Steuerung (9) mit Differenztemperatur-Regelung vorgesehen sind. Die Wärmepumpe befindet sich in räumlicher Nähe zur Vorrichtung. Bei der Vorrichtung gemäß Fig. 11 ist die Solaranlage aktiv, d.h. die Temperatur des Solarabsorbers liegt über derjenigen des Schwimmbades; bei der Vorrichtung gemäß Fig. 12 ist die Solaranlage inaktiv.

## Patentansprüche

1. Vorrichtung für die Steuerung der Komponenten eines Schwimmbads, **dadurch gekennzeichnet, daß** die Vorrichtung
• einen Zulauf von einem Skimmer (SK) aufweist, der über eine Verrohrung mit dem Eingang einer Umwälzpumpe (UP In) verbindbar ist,
• einen Zulauf vom Ausgang eines Filterkessels (F Out) aufweist, der durch eine Verrohrung mit einem Sperrorgan mit einem Kaltwassereingang (WP in) einer Wärmepumpe oder einer Kaltwassereinlaufdüse (ED1) des Schwimmbads verbindbar ist,
• einen Zulauf von einer Wärmepumpe (WP Out), der mit einer Warmwassereinlaufdüse (ED2 oder ED1) des Schwimmbads verbindbar ist,
• wobei die Vorrichtung die Steuerungsmittel (1) für eine Umwälzpumpe umfaßt.

2. Vorrichtung gemäß Anspruch 1, **dadurch gekennzeichnet, daß** eine elektronische Steuerung (1, 2, 3) für die Salzwasser- bzw. Süßwasseraufbereitung vorgesehen ist.

3. Vorrichtung gemäß Anspruch 1 oder Anspruch 2, **dadurch gekennzeichnet, daß** eine Meßvorrichtung (5) für den pH-Wert des Wassers vorgesehen ist.

4. Vorrichtung gemäß einem der vorhergehenden Ansprüche, **dadurch gekennzeichnet, daß** eine Dosierpumpe (4) für die pH-Wert-Regulierung des Wassers vorgesehen ist.

5. Vorrichtung gemäß einem der vorhergehenden Ansprüche, **dadurch gekennzeichnet, daß** eine Meßvorrichtung für die Konduktivität des Wassers vorgesehen ist.

6. Vorrichtung gemäß einem der vorhergehenden Ansprüche, **dadurch gekennzeichnet, daß** in einer Verrohrung mit einem Sperrorgan zwischen dem Zulauf von der Wärmepumpe (F Out) und der Kaltwassereinlaufdüse (ED1) ein Chlorinator (7) zur elektrochemischen Chlorerzeugung angeordnet ist.

7. Vorrichtung gemäß einem der vorhergehenden Ansprüche, **dadurch gekennzeichnet, daß** eine Dosierpumpe für die Chlorzugabe vorgesehen ist.

8. Vorrichtung gemäß einem der vorhergehenden Ansprüche, **dadurch gekennzeichnet, daß** eine automatische Meßvorrichtung (6) für das Redoxpotential des Wassers vorgesehen ist.

9. Vorrichtung gemäß einem der vorhergehenden Ansprüche, **dadurch gekennzeichnet, daß** in der Verrohrung zwischen dem Zulauf von der Wärmepumpe (F Out) und der Kaltwassereinlaufdüse (ED1) ein Solar-Wegeventil vorgesehen ist.

10. Vorrichtung gemäß einem der vorhergehenden Ansprüche, **dadurch gekennzeichnet, daß** das Solarwegeventil eine Differenztemperatur-Regelung aufweist.

11. Vorrichtung gemäß einem der vorhergehenden Ansprüche, **dadurch gekennzeichnet, daß** das Solarwegeventil über einen Stellmotor verstellbar ist.

12. Vorrichtung gemäß einem der vorhergehenden Ansprüche, **dadurch gekennzeichnet, daß** das Solarwegeventil mit einem Solarabsorberkreislauf verbunden ist.

13. Vorrichtung gemäß einem der vorhergehenden Ansprüche, **dadurch gekennzeichnet, daß** eine Vorrichtung zur Ansteuerung eines Stangenventils vorgesehen ist.

14. Vorrichtung gemäß einem der vorhergehenden Ansprüche, **dadurch gekennzeichnet, daß** die Sperrorgane als Schieber ausgebildet sind.

15. Vorrichtung gemäß einem der vorhergehenden Ansprüche, **dadurch gekennzeichnet, daß** die Vorrichtung auf einem Flächenelement angeordnet ist.
